# FASCICULE DE BREVET EUROPEEN

(11) **EP 3 374 237 B1**
(45) Date de publication et mention de la délivrance du brevet: **01.01.2020**
(21) Numéro de dépôt: 16809489.4
(22) Date de dépôt: 14.11.2016
(51) Int. Cl.: B60R 21/213, B60R 21/232

(54) **ARRANGEMENT D'UN DISPOSITIF D'AIRBAG DANS UN VEHICULE AUTOMOBILE**
ANORDNUNG EINER AIRBAGVORRICHTUNG IN EINEM KRAFTFAHRZEUG
ARRANGEMENT OF AN AIRBAG DEVICE IN A MOTOR VEHICLE

(30) Priorité: 12.11.2015 FR 1560830
(43) Date de publication de la demande: 19.09.2018
(73) Titulaire: Renault SAS, 92100 Boulogne Billancourt (FR)
(72) Inventeur: JEGARD, Loic, 78730 Saint-Arnoult-en-Yvelines (FR); LEFEBVRE, Benjamin, 91470 Les Molieres (FR)
(86) Numéro de dépôt international: PCT/FR2016/052941
(87) Numéro de publication internationale: WO 2017/081429

(56) Documents cités:
- EP-A2- 1 359 061
- JP-A- 2003 095 053
- US-A1- 2008 088 120

## Description

La présente invention concerne un arrangement d'un dispositif d'airbag dans un véhicule automobile, ainsi qu'un procédé de montage du dispositif d'airbag dans ledit véhicule.

L'invention concerne également un véhicule automobile comprenant au moins un tel arrangement de dispositif d'airbag.

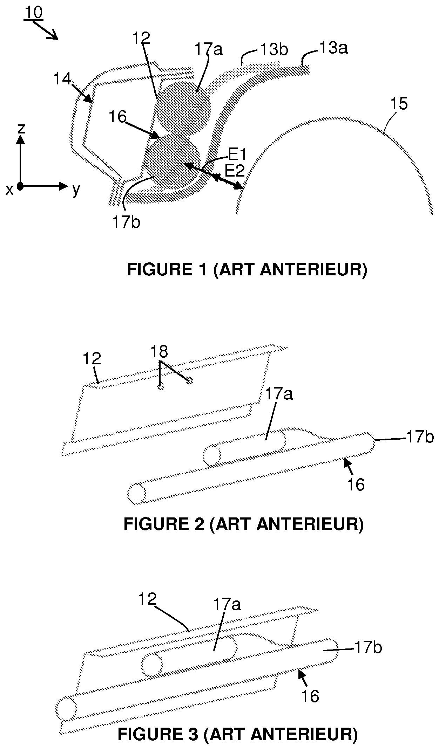

En référence aux figures 1 à 3, un dispositif d'airbag 16 du type airbag rideau, comprend de manière générale un organe de gonflage 17a tel qu'un générateur de gaz, et un sac gonflable 17b plié/enroulé destiné à se gonfler et se déployer dans un habitacle du véhicule notamment lors d'un choc frontal et/ou latéral et ce, entre des passagers du véhicule et des vitres latérales de ce dernier.

Il est connu dans l'état de la technique qu'un arrangement 10 d'un tel dispositif d'airbag 16 comprend une poutre de brancard 14 de pavillon sur laquelle est monté ce dispositif 16. Plus précisément, dans cette configuration, l'organe de gonflage 17a est fixé directement sur des zones de fixation 18 définies sur une doublure 12 de brancard de la poutre 14. Dans cet arrangement 10 une garniture de pavillon 13a est ensuite agencée dans l'habitacle permettant ainsi de dissimuler le dispositif d'airbag 4.

Toutefois, un tel arrangement 10 a pour inconvénient majeur d'occasionner un encombrement important dans l'habitacle du véhicule engendrant ainsi une dégradation de la mobilité et du confort des passagers du véhicule notamment de celles de leur tête. En effet, en référence à la figure 1, l'écart E2 entre le passager et notamment sa tête, et la garniture de pavillon 13a lorsque le dispositif d'airbag 16 est agencé dans le véhicule, est fortement réduit en comparaison avec un écart E1 entre une garniture de pavillon 13b et ce passager lorsque le véhicule est dépourvu de ce dispositif d'airbag 16.

En complément, on notera qu'au regard de la réglementation présente et à venir en la matière, un tel écart E2 est amené à se réduire encore plus. En effet, la réglementation requiert l'utilisation d'organes de gonflage de taille de plus en plus importante et un positionnement longitudinal du sac gonflable dans le véhicule pour garantir un déploiement efficace du sac avant et arrière. De plus, cette réglementation prévoit que de tels dispositifs d'airbag doivent être implémentés dorénavant et de manière systématique dans toutes les catégories de véhicules notamment dans les véhicules de petites catégories tels que les micro-urbaines B0 ou encore les mini-citadines B1 qui en étaient pour certaines dépourvues du fait notamment d'un volume intérieur de l'habitacle déjà restreint. Le document US 2008/0088120 A1 révèle un arrangement d'un dispositif d'airbag, où un passage donnant accès à l'espace de positionnement de l'organe de gonflage du dispositif d'airbag est défini entre le panneau de côté intérieur et le panneau de côté extérieur.

La présente invention vise à pallier ces inconvénients liés aux arrangements de dispositifs d'airbag dans les véhicules de l'art antérieur.

Dans ce dessein, l'invention concerne un arrangement d'un dispositif d'airbag notamment du type airbag rideau dans un véhicule automobile défini par les caractéristiques de la revendication 1.

Dans d'autres modes de réalisation :
- l'arrangement comprend une plaque de montage apte à assurer la fixation du dispositif d'airbag à la doublure de brancard ;
- une plaque de montage comprend au moins une deuxième zone de fixation prévu pour une fixation de ladite plaque de montage à la doublure de brancard ;
- une plaque de montage comprend au moins une troisième zone de fixation au niveau de laquelle l'organe de gonflage est fixé à ladite plaque ;
- une plaque de montage comprend une zone d'agencement d'une première composante d'un sac gonflable du dispositif d'airbag ;
- la plaque comprend un orifice dans lequel est agencée une connectique ou au travers duquel un câble électrique comprenant une telle connectique peut être positionné ;
- une ouverture comprend un bord notamment revêtu d'un matériau de protection tel que du caoutchouc, et
- une ouverture comprend un bord au niveau duquel est défini un élément de guidage.

L'invention concerne également un procédé de montage d'un dispositif d'airbag notamment du type airbag rideau dans un véhicule défini par les caractéristiques de la revendication 7.

Avantageusement, le procédé comprend une étape d'assemblage d'une plaque de montage au dispositif d'airbag.

En particulier, le procédé comprend une étape de fixation de la plaque sur la doublure de brancard.

L'invention concerne aussi un véhicule comprenant au moins un tel arrangement.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figure 1 représente une vue en coupe transversale d'une partie du véhicule comportant un arrangement du dispositif d'airbag sur la poutre de brancard du pavillon du véhicule automobile dans l'art antérieur ;
- la figure 2 est une vue schématique d'une doublure de brancard de la poutre de brancard et d'un dispositif d'airbag susceptible d'être monté sur ladite doublure dans l'art antérieur ;
- la figure 3 représente une vue schématique du dispositif d'airbag monté sur la doublure de brancard dans l'art antérieur ;
- la figure 4 représente une vue en coupe transversale d'une partie d'un véhicule comportant un arrangement d'un dispositif d'airbag sur une poutre de brancard d'un pavillon du véhicule automobile, selon un mode de réalisation de l'invention ;
- la figure 5 est une vue schématique d'une doublure de brancard de la poutre de brancard, du dispositif d'airbag et d'une plaque de montage susceptibles d'être montés sur ladite doublure, selon le mode de réalisation de l'invention ;
- la figure 6 est une vue schématique de la plaque de montage assemblée au dispositif d'airbag, et de la doublure de brancard, selon le mode de réalisation de l'invention ;
- les figures 7A et 7B sont des vues schématiques de la plaque de montage assemblée au dispositif d'airbag, la plaque comprenant un orifice permettant le passage/agencement d'un élément de connexion électrique, selon le mode de réalisation de l'invention ;
- la figure 8 représente une vue schématique du dispositif d'airbag et de la plaque de montage montés sur la doublure de brancard, selon le mode de réalisation de l'invention, et
- la figure 9 est une représentation schématique d'un procédé de montage du dispositif d'airbag dans le véhicule automobile.

La description est faite en référence à un repère orthonormé (X, Y, Z) associé classiquement à un véhicule automobile, dans lequel X est la direction longitudinale avant-arrière du véhicule dirigée vers l'arrière, Y est la direction transversale droite-gauche au véhicule, qui est horizontale et perpendiculaire à X, dirigée vers la droite, et Z est la direction verticale dirigée vers le dessus. Par ailleurs, les termes « avant, arrière, droit, gauche, horizontal, vertical, supérieur, inférieur » sont définis par rapport au sens de déplacement du véhicule.

Dans un mode de réalisation de l'invention, un véhicule automobile comprend au moins un arrangement 1 d'un dispositif d'airbag 4 dans son habitacle. Chaque arrangement 1 comprend de manière non limitative et non exhaustive, une poutre de brancard 2 d'un pavillon du véhicule, le dispositif d'airbag 4 et une plaque de montage 6.

La poutre de brancard 2 encore appelée brancard de pavillon, s'étend longitudinalement entre des traverses avant et arrière de la structure du véhicule. La structure du véhicule comprend de préférence deux poutres de brancard 2. Les traverses avant et arrière, s'étendant transversalement au véhicule de part et d'autre du toit, dont la première fonction est d'assurer la rigidité de l'ensemble de la structure de la carrosserie. La traverse avant se trouve généralement au croisement entre les montants de baie et qui encadrent et soutiennent le pare-brise et les poutres de brancard 2 qui s'étendent longitudinalement vers l'arrière du pavillon jusqu'à la traverse arrière. Cette traverse avant reçoit sur un premier côté avant la partie supérieure du pare-brise et sur le second côté arrière l'extrémité avant du toit du véhicule. De manière semblable, la traverse arrière de pavillon délimite la partie arrière du toit de la lunette arrière.

Ainsi que nous l'avons vu précédemment, la poutre de brancard 2 s'étend longitudinalement entre les traverses avant et arrière et ce, le long d'une partie supérieure d'un encadrement de porte latérale avant et arrière et éventuellement le long d'une partie supérieure d'une custode, c'est-à-dire le long de la partie supérieure d'un panneau d'aile arrière muni d'une vitre latérale. Cette poutre de brancard 2 est habituellement assemblée sur la caisse par soudage et forme ainsi une pièce constitutive de la caisse, indissociable. Chaque poutre de brancard 2 assure la transmission des efforts et donc la rigidité de la caisse du véhicule automobile entre la partie supérieure d'un pied milieu et l'extrémité des traverses avant et arrière de pavillon du même côté. La poutre de brancard 2 est habituellement une pièce de tôlerie, en acier voire en alliage d'aluminium. Chaque poutre de brancard 2 n'est pas visible à l'extérieur elle est cachée par différentes pièces de la carrosserie telles que le pavillon ou des pièces 20 du côté de caisse, et à l'intérieur elle est habituellement masquée par l'habillage intérieur de l'habitacle telle qu'une garniture 7 de pavillon comprise dans cette arrangement 1.

La poutre de brancard 2 comprend un renfort 3a de brancard et une doublure 3b de brancard. Ce renfort 3a et la doublure 3b sont assemblés ensemble de sorte à former un espace intérieure 3c. La doublure 3b de brancard comprend une ouverture 21 et des premières zones de fixation 8a.

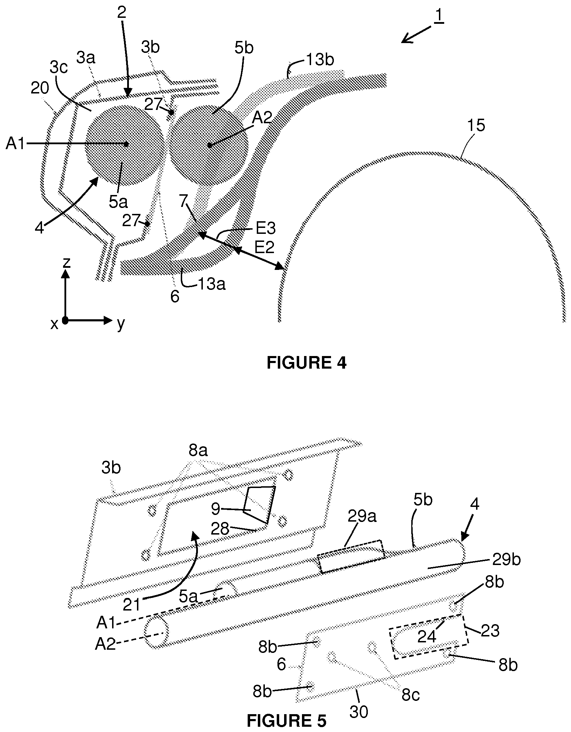

Cette ouverture 21 visible sur les figures 4, 5 et 6, est définie pour une insertion d'une partie du dispositif d'airbag 4 dans l'espace intérieure 21 de la poutre 2. Cette partie du dispositif d'airbag 4 correspond à un organe de gonflage 5a voire à cet organe de gonflage 5a et une première composante 29a d'un sac gonflable 5b qui sont décrits par la suite. Cette ouverture 21 a de préférence une forme générale rectangulaire et forme un accès à l'espace intérieur 3c de la poutre de brancard 2. Cette ouverture 21 comprend un bord 28 au niveau duquel est défini un élément de guidage 9 s'étendant selon une direction sensiblement transversale dans l'espace intérieur de la poutre de brancard 2 et ce, vers le renfort de brancard 3a. Le bord 28 peut être un bord tombé qui est notamment revêtu par un matériau de protection de type caoutchouc. L'élément de guidage 9 est de préférence défini au niveau d'une partie du bord 28 qui est susceptible d'être en contact avec le dispositif d'airbag 4 et en particulier avec le sac gonflable 5b constituant ce dernier.

Les premières zones de fixation 8a sont agencées au niveau du pourtour de l'ouverture 21 et de préférence à proximité du bord 28 de cette ouverture 21.

Le dispositif d'airbag 4 comprend un organe de gonflage 5a et le sac gonflable 5b. Cet organe de gonflage 5a autrement appelé générateur d'airbag, est un générateur de gaz adapté à ce type de dispositif d'airbag 4 qui est apte dès qu'il reçoit un signal électrique de commande d'un ordinateur de bord du véhicule relative à un choc frontal et/ou latéral ou lorsque le véhicule subit des tonneaux à la suite du choc latéral, de générer un fort débit de gaz, pour déployer et gonfler le sac 5b. On notera qu'il peut prévoir ensuite la génération d'un débit de gaz plus faible pendant une durée prédéfinie pour maintenir la pression dans le sac 5b.

Cet organe de gonflage 5a a un volume qui est prédéfini pour permettre son insertion dans l'espace intérieur 3c en traversant l'ouverture 21 de la doublure 3b de brancard. Ainsi que l'illustrent les figures 4, 5 et 6, il peut avoir une forme tubulaire et une section transversale de forme circulaire.

Cet organe de gonflage 5a est relié au sac gonflable 5b de ce dispositif d'airbag 4. Ce sac gonflable 5b comprend des première et deuxième composantes 29a, 29b. Ce sac gonflable 5b peut être un coussin gonflable sous forme de rideau et est visible sur les figures 4 à 8 plié en formant notamment ainsi la deuxième composante 29b afin d'avoir une forme peu épaisse de façon à s'étendre longitudinalement selon la direction avant-arrière du véhicule. En étant ainsi plié, la deuxième composante 29b du sac gonflable 5b peut avoir une forme tubulaire et présenter une section circulaire. Lorsque l'organe de gonflage 5a alimente le sac 5b avec du gaz, ce dernier se gonfle afin d'être déployé vers le bas le long d'une surface du côté intérieur de l'habitacle du véhicule. Ainsi que l'illustre les figures 4 à 6, la deuxième composante 29b du sac gonflable 5b lorsqu'il est plié, peut présenter une longueur qui est supérieure à celle de l'organe de gonflage 5a. Ce sac 5b peut être réalisé en matériau souple tel qu'un élastomère thermoplastique (TPE), appelé également caoutchouc thermoplastique.

Ainsi que nous l'avons vu, le sac gonflable 5b est relié à l'organe de gonflage 5a, en particulier au niveau de la première composante 29a, visible sur les figures 5 à 8. Cette première composante 29a comprend une première extrémité qui est définie au niveau d'une paroi extérieure de la deuxième composante 29b, notamment la paroi extérieure cylindrique de cette dernière, et une deuxième extrémité qui est reliée à une extrémité de l'organe de gonflage 5a dans la continuité du prolongement de ce dernier. Une telle première composante 29a est prévue pour être insérée en partie dans l'espace intérieur 3c de la poutre de brancard 2 en prenant notamment appui au niveau d'une zone de contact sur l'élément de guidage 9. Ainsi, l'élément de guidage 9 dirige la première composante 29a lorsqu'elle se déploie, vers l'extérieur de l'espace intérieure 3c évitant ainsi que cette première composante 29a ne s'étende dans cette espace intérieur 3c lors du déploiement du sac gonflable 5b. De plus cet élément de guidage 9 évite également que le bord 28 de l'ouverture 21 ne vienne endommager la première composante 29a lors de ce déploiement du sac 5b.

On notera que dans cette configuration du dispositif d'airbag 2, des axes centraux A1, A2 de respectivement l'organe de gonflage 5a et la deuxième composante 29b du sac gonflable 5b visibles sur les figures 4 et 5, sont sensiblement parallèles entre eux.

Ce dispositif d'airbag 4 permet de préférence d'empêcher qu'un passager du véhicule ne soit projeté à l'extérieur du véhicule au niveau d'une extrémité longitudinale de celui-ci. Il présente grâce notamment au sac gonflable 5b, une excellente fonction d'absorption des chocs (propriétés d'amortissement) que reçoit un passager à l'intérieur du véhicule.

Dans cet arrangement 1, la plaque de montage 6 est notamment apte à assurer la fixation du dispositif d'airbag 4 à la doublure de brancard 3b. Cette plaque de montage 6 a une forme générale particulière qui est définie pour que cette plaque 6 assure lorsqu'elle est montée sur la garniture de brancard 3b, une obturation de l'ouverture 21 tout en autorisant le passage de la deuxième composante 29b de l'espace intérieur 2 vers la première composante 29a du sac gonflable 5b. Dans le présente mode de réalisation, cette plaque 6 peut avoir une forme générale rectangulaire et comprend deux faces planes et parallèles entre elles. Elle peut être réalisée en matériau rigide par exemple en métal ou encore en plastique. En référence à la figure 5, la plaque 6 comprend également une zone d'agencement 23 de la première composante 29a du sac gonflable 5b qui est définie pour entourer partiellement un contour de cette première composante 29a. Cette zone d'agencement 23 peut avoir la forme d'un « U ». Cette zone d'agencement 23 comprend un bord 24 notamment un bord tombé qui peut être revêtu d'un matériau de protection tel que du caoutchouc, qui permet d'éviter un endommagement de la première composante 29a du sac 5b par ce bord 24, notamment lors du déploiement du sac 5b.

La plaque 6 comprend également des deuxièmes et troisièmes zones de fixation 8b, 8c. Les deuxièmes zones de fixation 8b sont agencées sur la plaque 6 de manière à coopérer de façon complémentaire avec les premières zones de fixation 8a de la doublure 3b lors de l'assemblage de la plaque 6 à cette doublure 3b. Lorsque la plaque 6 est assemblée à la doublure 3b, ces premières et deuxièmes zones de fixation 8a, 8b sont situées en regard les unes des autres. La plaque 6 comprend de préférence autant de deuxième zone de fixation 8b que la doublure 3b comprend de premières zones de fixation 8a. Ces deuxièmes zones de fixation 8b sont situées de préférence à proximité du bord 30 de cette plaque 6. Les troisièmes zones de fixation 8c sont définies pour participer au montage de l'organe de gonflage 5a sur la plaque 6.

Dans cette configuration, les premières et deuxièmes zones de fixation 8a, 8b sont reliées mécaniquement les unes aux autres à partir d'éléments de fixation 27 visibles sur la figure 4. Ces éléments de fixation 27 peuvent être des points de soudure, des rivets ou encore des vis coopérants avec des trous compris dans les premières et deuxièmes zones de fixation 8a, 8b. Les troisièmes zones de fixation 8c sont reliées mécaniquement avec l'organe de gonflage 5a par des éléments de fixation tels que des colliers de serrage situés autour de cet organe 5a qui coopèrent avec des trous compris dans ces troisièmes zones de fixation 8c ainsi que des vis dirigés vers l'intérieur du véhicule fixé sur la plaque 6 par un écrou borgne pour ne pas endommager le sac 5b.

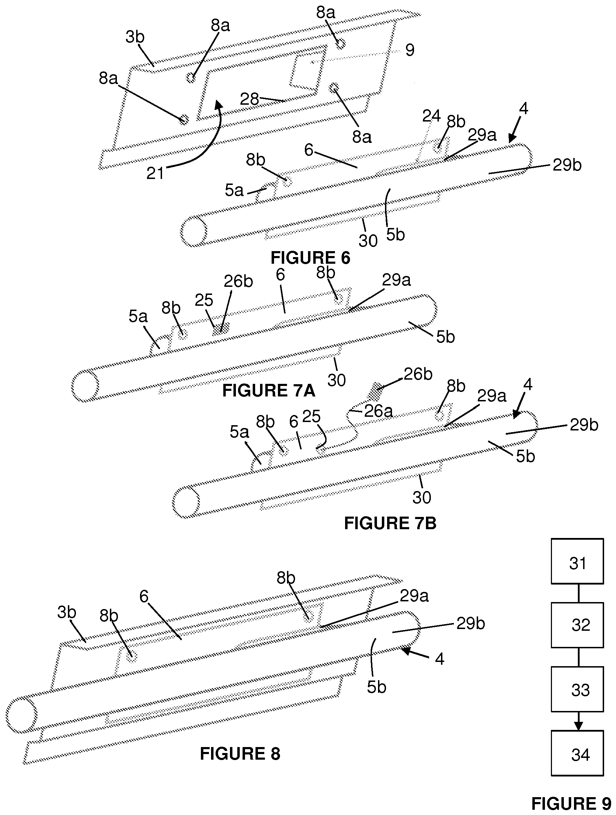

Sur les figures 7A et 7B, la plaque 6 peut comprendre un orifice 25 dans lequel peut être agencé une connectique 26b ou au travers duquel un câble électrique 26a comprenant une telle connectique 26b peut être positionné. La connectique 26b étant ensuite connectée à l'ordinateur de bord du véhicule qui contrôle le déclenchement du dispositif d'airbag 4.

L'arrangement 1 comprend également une garniture de pavillon 7 qui permet de dissimuler le dispositif d'airbag 4 ainsi monté dans l'habitacle du véhicule.

En référence à la figure 9, l'invention concerne également un procédé de montage du dispositif d'airbag 4 dans le véhicule automobile. Ce procédé comprend une étape d'assemblage 31 de la plaque de montage 6 au dispositif d'airbag 4. Lors de cette étape 31, l'organe de gonflage 5a est relié mécaniquement à la plaque 6 au niveau des troisièmes zones de fixation 8c de cette dernière à partir des éléments de fixation, après un agencement de la première composante 29a du sac 5b dans la zone d'agencement 23 de la plaque 6.

Le procédé prévoit ensuite une étape d'agencement 32 d'une partie du dispositif d'airbag 4 notamment l'organe de gonflage 5a, dans l'espace intérieur 3c de la poutre 2. Plus précisément, cette partie du dispositif d'airbag 4 peut correspondre à l'organe de gonflage 5a et à la partie de la première composante 29a du sac gonflable 5b dans cet espace intérieur 3c de la poutre de brancard 2. Cette étape 32 prévoit une insertion de l'organe de gonflage 5a et de la partie de la première composante 29a dans cet espace intérieur 3c en traversant l'ouverture 21. Ainsi, la plaque 6 est intercalée entre l'organe de gonflage 5a et la deuxième composante 29b du sac 5b.

Par la suite, le procédé prévoit une étape fixation 33 de la plaque 6 sur la doublure 3a lors de laquelle les premières et deuxièmes zones de fixation 8a, 8b sont reliées mécaniquement l'une à l'autre à partir des éléments de liaison 27.

Le procédé prévoit ensuite une étape de montage 34 de la garniture de pavillon dans un habitacle du véhicule qui vient dissimuler à la vue des passagers situés dans l'habitacle, le dispositif d'airbag 4.

En référence à la figure 4, un tel arrangement 1 du dispositif d'airbag 4 dans le véhicule permet de réduire l'encombrement du dispositif d'airbag 4 dans le véhicule et notamment dans l'habitacle du véhicule. En effet, la garniture de pavillon 7 peut ainsi avoir une forme qui offre un espace plus important dans l'habitacle que la garniture 13b relative à l'arrangement de l'état de l'art, du fait notamment de l'agencement d'une partie de ce dispositif d'airbag 4 dans l'espace intérieur 3c de la poutre de brancard 2. Ainsi, la tête 15 du passager du véhicule est éloignée selon un écart E3 de la garniture de pavillon 7 permettant ainsi une mobilité optimale de cette dernière dans l'habitacle. Cet écart E3 est supérieur à l'écart E2 de l'état de l'art entre la garniture du pavillon 13a et la tête 15 du passager. Ainsi le confort du passager s'en trouve amélioré.

La présente invention n'est pas limitée au mode de réalisation qui a été explicitement décrit, mais elle en inclut les diverses variantes et généralisations contenues dans le domaine des revendications ci-après.

## Revendications

1. Arrangement (1) d'un dispositif d'airbag (4) notamment du type airbag rideau dans un véhicule automobile comprenant une poutre de brancard (2) d'un pavillon du véhicule pourvue d'un renfort de brancard (3a) et d'une doublure de brancard (3b) assemblés entre eux de sorte à former un espace intérieur (3c) fermé dans lequel est agencé une partie du dispositif d'airbag (4) notamment un organe de gonflage (5a) du dispositif d'airbag (4), la doublure de brancard (3b) comprenant une ouverture (21) définie pour une insertion de ladite partie du dispositif d'airbag (4) dans l'espace intérieure (3c).

2. Arrangement (1) selon la revendication précédente, **caractérisé en ce qu'**il comprend une plaque de montage (6) apte à assurer la fixation du dispositif d'airbag (4) à la doublure de brancard (3b).

3. Arrangement (1) selon l'une quelconque des revendications précédentes, **caractérisé en ce que** :
- une plaque de montage (6) comprend au moins une deuxième zone de fixation (8b) prévu pour une fixation de ladite plaque (6) de montage à la doublure de brancard (3b), et/ou
- une plaque de montage (6) comprend au moins une troisième zone de fixation (8c) au niveau de laquelle l'organe de gonflage (5a) est fixé à ladite plaque (6), et/ou
- une plaque de montage (6) comprend une zone d'agencement (23) d'une première composante (29a) d'un sac gonflable (5b) du dispositif d'airbag (4).

4. Arrangement (1) selon l'une quelconque des revendications précédentes, **caractérisé en ce que** la plaque (6) comprend un orifice (25) dans lequel est agencée une connectique (26b) ou au travers duquel un câble électrique (26a) comprenant une telle connectique (26b) peut être positionné.

5. Arrangement (1) selon l'une quelconque des revendications précédentes, **caractérisé en ce qu'**une ouverture (21) comprend un bord (24) notamment revêtu d'un matériau de protection tel que du caoutchouc.

6. Arrangement (1) selon l'une quelconque des revendications précédentes, **caractérisé en ce qu'**une ouverture (21) comprend un bord (28) au niveau duquel est défini un élément de guidage (9).

7. Procédé de montage d'un dispositif d'airbag (4) notamment du type airbag rideau dans un véhicule automobile comprenant une étape d'agencement (32) d'une partie du dispositif d'airbag (4) notamment d'un organe de gonflage (5a), dans un espace intérieur (3c) d'une poutre de brancard (2) d'un pavillon du véhicule pourvue d'un renfort de brancard (3a) et d'une doublure de brancard (3b) assemblés entre eux de sorte à former ledit espace intérieur (3c) fermé, l'étape d'agencement (32) prévoyant une insertion d'une partie du dispositif d'airbag (4) dans cet espace intérieur (3c) en traversant une ouverture (21) de la doublure de brancard (3b).

8. Procédé selon la revendication précédente, **caractérisé en ce qu'**il comprend :
- une étape d'assemblage (31) d'une plaque de montage (6) au dispositif d'airbag (4), et/ou
- une étape de fixation (33) de la plaque (6) sur la doublure de brancard (3b).

9. Véhicule comprenant au moins un arrangement (1) selon l'une quelconque des revendications 1 à 6.

## Patentansprüche

1. Anordnung (1) einer Airbagvorrichtung (4), insbesondere vom Typ eines Vorhangairbags, in einem Kraftfahrzeug, welche einen Dachlängsträger (2) eines Daches des Fahrzeugs umfasst, der mit einer Längsträgerverstärkung (3a) und einer Längsträgerverkleidung (3b) versehen ist, die so zusammengebaut sind, dass sie einen geschlossenen inneren Raum (3c) bilden, in welchem ein Teil der Airbagvorrichtung (4) angeordnet ist, insbesondere eine Aufblasvorrichtung (5a) der Airbagvorrichtung (4), wobei die Längsträgerverkleidung (3b) eine Öffnung (21) umfasst, die für ein Einsetzen dieses Teils der Airbagvorrichtung (4) in den inneren Raum (3c) definiert ist.

2. Anordnung (1) nach dem vorhergehenden Anspruch, **dadurch gekennzeichnet, dass** sie eine Montageplatte (6) umfasst, die geeignet ist, die Befestigung der Airbagvorrichtung (4) an der Längsträgerverkleidung (3b) sicherzustellen.

3. Anordnung (1) nach einem der vorhergehenden Ansprüche, **dadurch gekennzeichnet, dass**:
- eine Montageplatte (6) wenigstens einen zweiten Befestigungsbereich (8b) umfasst, der für eine Befestigung der Montageplatte (6) an der Längsträgerverkleidung (3b) vorgesehen ist, und/oder
- eine Montageplatte (6) wenigstens einen dritten Befestigungsbereich (8c) umfasst, an welchem die Aufblasvorrichtung (5a) an der Platte (6) befestigt ist, und/oder
- eine Montageplatte (6) einen Bereich der Anordnung (23) einer ersten Komponente (29a) eines Luftsacks (5b) der Airbagvorrichtung (4) umfasst.

4. Anordnung (1) nach einem der vorhergehenden Ansprüche, **dadurch gekennzeichnet, dass** die Platte (6) eine Durchgangsöffnung (25) umfasst, in welcher ein Anschlussmittel (26b) angeordnet werden kann oder durch die hindurch ein Stromkabel (26a), das ein solches Anschlussmittel (26b) umfasst, positioniert werden kann.

5. Anordnung (1) nach einem der vorhergehenden Ansprüche, **dadurch gekennzeichnet, dass** eine Öffnung (21) einen Rand (24) umfasst, der insbesondere mit einem Schutzmaterial wie etwa Gummi beschichtet ist.

6. Anordnung (1) nach einem der vorhergehenden Ansprüche, **dadurch gekennzeichnet, dass** eine Öffnung (21) einen Rand (28) umfasst, an welchem ein Führungselement (9) definiert ist.

7. Verfahren zur Montage einer Airbagvorrichtung (4), insbesondere vom Typ eines Vorhangairbags, in einem Kraftfahrzeug, welches einen Schritt der Anordnung (32) eines Teils der Airbagvorrichtung (4), insbesondere einer Aufblasvorrichtung (5a), in einem inneren Raum (3c) eines Dachlängsträgers (2) eines Daches des Fahrzeugs umfasst, der mit einer Längsträgerverstärkung (3a) und einer Längsträgerverkleidung (3b) versehen ist, die so zusammengebaut sind, dass sie diesen geschlossenen inneren Raum (3c) bilden, wobei der Schritt der Anordnung (32) ein Einsetzen eines Teils der Airbagvorrichtung (4) in diesen inneren Raum (3c) vorsieht, indem eine Öffnung (21) der Längsträgerverkleidung (3b) durchquert wird.

8. Verfahren nach dem vorhergehenden Anspruch, **dadurch gekennzeichnet, dass** es umfasst:
- einen Schritt des Anbaus (31) einer Montageplatte (6) an die Airbagvorrichtung (4), und/oder
- einen Schritt der Befestigung (33) der Platte (6) an der Längsträgerverkleidung (3b).

9. Fahrzeug, welches wenigstens eine Anordnung (1) nach einem der Ansprüche 1 bis 6 umfasst.

## Claims

1. Arrangement (1) of an airbag device (4) notably of the curtain airbag type in a motor vehicle comprising a runner beam (2) of a roof of the vehicle provided with a runner reinforcement (3a) and a runner lining (3b) assembled together so as to form a closed interior space (3c) in which is arranged a part of the airbag device (4) notably an inflation unit (5a) of the airbag device (4), the runner lining (3b) comprising an opening (21) defined for an insertion of said part of the airbag device (4) into the interior space (3c).

2. Arrangement (1) according to the preceding claim, **characterized in that** it comprises a mounting plate (6) capable of ensuring the fastening of the airbag device (4) to the runner lining (3b).

3. Arrangement (1) according to either one of the preceding claims, **characterized in that**:
- a mounting plate (6) comprises at least one second fastening zone (8b) provided for a fastening of said mounting plate (6) to the runner lining (3b), and/or
- a mounting plate (6) comprises at least one third fastening zone (8c) where the inflation member (5a) is fastened to said plate (6), and/or
- a mounting plate (6) comprises a layout zone (23) for a first component (29a) of an inflatable bag (5b) of the airbag device (4).

4. Arrangement (1) according to any one of the preceding claims, **characterized in that** the plate (6) comprises an orifice (25) in which is arranged connection means (26b) or through which an electrical cable (26a) comprising such connection means (26b) can be positioned.

5. Arrangement (1) according to any one of the preceding claims, **characterized in that** an opening (21) comprises an edge (24) notably coated with a protection material such as rubber.

6. Arrangement (1) according to any one of the preceding claims, **characterized in that** an opening (21) comprises an edge (28) at which a guiding element (9) is defined.

7. Method for mounting an airbag device (4) notably of the curtain airbag type in a motor vehicle comprising a step of arrangement (32) of a part of the airbag device (4) notably of an inflation member (5a), in an interior space (3c) of a runner beam (2) of a roof of the vehicle provided with a runner reinforcement (3a) and a runner lining (3b) assembled together so as to form said closed interior space (3c), the arrangement step (32) providing an insertion of a part of the airbag device (4) into this interior space (3c) by passing through an opening (21) of the runner lining (3b).

8. Method according to the preceding claim, **characterized in that** it comprises:
- a step of assembling (31) a mounting plate (6) with the airbag device (4), and/or
- a step of fastening (33) the plate (6) onto the runner lining (3b).

9. Vehicle comprising at least one arrangement (1) according to any one of Claims 1 to 6.
